# EUROPEAN PATENT APPLICATION

(11) **EP 2 120 150 A1**
(43) Date of publication of application: **18.11.2009**
(21) Application number: 08008824.8
(22) Date of filing: 13.05.2008
(51) Int. Cl.: G06F 11/34

(54) **Method and system for monitoring and evaluating application performance**

(71) Applicant: SIEMENS AKTIENGESELLSCHAFT, 80333 München (DE)
(72) Inventor: Solimano, Marco, 16126 Genova (IT)
(74) Representative: Fischer, Michael

(57) **Abstract**

Method for monitoring and evaluating application performance in a distributed control system (DCS), comprising the steps of defining at least one data collector element of a specific type, defining an insertion point of the data collector element to be inserted in a workflow of the application, defining a specific data collection mode, associated with the data collector element, optionally defining at least one parameter to be monitored, the parameter being associated to the data collector element, embedding the data collector element together with the specific data collection mode and the optionally defined parameter at the insertion point into the workflow, enabling a data capture mode and a transfer mode for captured data for the data collector element, activating a data receiving and storage element, transferring the captured data from the data collector element to the receiving and storage element.

## Description

The invention relates to a method and a system for monitoring and evaluating application performance, especially a computer based application used for automation of industrial processes, optimisation of manufacturing processes, collection of production data, etc.

Computer based applications in industrial processes have moved their scope of usage from the plant floor level, which consists of controlling single machines or collecting data to be presented to an operator, to upper levels consisting of tools that help in optimising production as well as in collecting general data to be archived and further analysed. Possible applications for such tools are various and their number is rapidly increasing. In the chain of processes which have to be accomplished until a product is ready to be sold, the action scope of these tools is situated between the enterprise resource planning (ERP) level and plant floor level. Many of the tools are developed using environments helping users to implement own tool pieces which are adapted to their particular needs. These environments may comprise different separate modules of which some examples are: an order manager, an SAP interface, a report mechanism, etc. Thus, a performance analysis tool has to take into account logic inserted by the users.
In other words, a shift in requirements about process behaviour analysis can be observed, meaning that in the past the focus was on monitoring an industrial process itself for example by collecting report data about plant working conditions during good production phases. Now it becomes more and more important to monitor a software controlling process itself. Considering that such software is actually a combination of different collaborative components organized according to a logic implemented by process engineers, such monitoring cannot be faced with a traditional approach, that is, monitoring standard system parameters like for example CPU usage. The shift in requirements imposed to tools for process behaviour analysis further arises from the facts that real time issues become more and more important and the complexity of the computer based applications increases as their field of usage increases.
For these reasons, the development of tools being able to monitor overall and specific application performance metrics is becoming a compelling need. The tools should have the possibility to collect sets of data describing the overall behaviour of a system and to analyze these sets of data in order to provide users with information enabling optimization of load of machines, etc.
Many developing tools and environments allow programmers to specify their point for collecting data and debug information, however with a textual approach. Furthermore, software products provide information about their resource usage but lack the possibility to allow users to insert their data such that it is analyzed together with system information. Some report tools or EBR applications collect data from the process to be controlled itself but lack the possibility to provide data related to controller behaviour and performances. Thus, a user has only the possibility to obtain system data like operating system status variables. However, these variables represent basic data related to pure PC working status and can be divided into global data and process related data. Thus, in other words, this data is linked to the working model of the PC rather than to the specific application. Examples of global data are: CPU usage (user time and kernel time), kernel handle usage, thread number, network load, memory usage, number of context switches. Examples of process related data, which are provided by support software suites and application programming interfaces (APIs) coming with a product and describing metrics related to product activity, are: memory variables, number of executions and number of incoming events. Both the global data and the process related data don't take into account any logic programmed by users by means of for example an API provided by a machine manufacturer. Thus, a way of tailoring information to describe logic bottlenecks like requested by a combination of tools and user's logic is missing.

One goal to be achieved is to provide a method for evaluating application performance, with a possibility for a user to define custom points of interest to be monitored.

One way the goal is achieved is in providing a method and a system for monitoring and evaluating application performance in a distributed control system (DCS), comprising the steps of:
a) defining at least one data collector element of a specific type,
b) defining an insertion point of the data collector element to be inserted in a workflow of the application,
c) defining a specific data collection mode, associated with the data collector element,
d) optionally defining at least one parameter to be monitored, the parameter being associated to the data collector element,
e) embedding the data collector element together with the specific data collection mode and the optionally defined parameter at the insertion point into the workflow,
f) enabling a data capture mode and a transfer mode for captured data for the data collector element,
g) activating a data receiving and storage element,
h) transferring the captured data from the data collector element to the receiving and storage element.

The most important advantage of the proposed method is an ability to enable a developer to evaluate an own software by analysing its performance based on custom data, whereby the developer decides what information should be collected and
when this information should be collected, by specifying the data collector element, which, itself, avoids a modification of the workflow but simply collects custom data, which then is stored by the data receiving and storage element. The developer has the choice to analyse the captured data at a later point in time, either independently of additional parameters or to take into account system data provided by existing performance measurement tools. Thereby, the data collector element of the specific type is inserted into the workflow at a position of interest. By further specifying the specific data collection mode and optionally required parameters, a data set is created, containing all necessary information to perform a data capture in a manner desired and defined by the developer. The captured data is transmitted to the data receiving and storage element in order to be saved for later use. One advantage of a decoupling of the data capture mode and the receiving and storage element is that a minimal influence of any background processes, like for example hard disk access, on the workflow itself is reached, thereby rendering the captured data as precise as possible. Another advantage is, besides having an overall performance analysis, to discover bottlenecks in workflows, thus reaching a fine tuning of the workflow by analysing small entities belonging to the workflow.

Two types of information have to be provided such that a consistent capture is reached: a first type relates to what kind of data should be collected and a second type relates to how and when data should be collected.
The specific type of the data collector element is chosen out of the following types: start time of operation, end time of operation, duration of operation, an operation input value, an operation output value, a user-defined value. These options describe what data should be collected, e.g. a starting or ending time of a certain operation, a period of execution of an operation, collecting of an input or an output value or a user-defined value. Collecting a user-defined value makes the method more flexible because it allows monitoring data which in first place is not directly related to the insertion point or the operation where the data collector element has been placed by the developer. For example, input, output or user-defined values are memory variables, a number of parallel executions of tasks, a number of incoming events.

The specific data collection mode is chosen out of the following modes: collect data before launching operation, collect data after executing operation, collect data before and after operation, start collecting data from here, stop collecting data here. These options describe how and when data should be collected, e.g. before an operation starts or after an operation has ended or both before and after the operation. Furthermore, the developer has the possibility to specify a point of start of data capture and a point of finish of the data capture, which advantageously allows defining a larger span of monitoring possibilities. For example, in this manner data can be captured over an interval of several operations or it can be captured for only a couple of sub operations within a larger process. The mode "stop collecting data here" is special, as it requires an additional parameter specifying which of previously in the workflow defined data collector elements will stop collecting information. The parameter is chosen out of a list containing all previously inserted data collector elements. For this purpose, a specialized routine parses the workflow and collects all stoppable data collector elements.

The insertion point is graphically defined in the workflow. Preferably the insertion point is chosen by the developer in a graphical manner, which advantageously makes it easier to identify a best insertion point, for example by examining a flow chart of the workflow. Thus, taking into account a specification of type and mode of the data capture and the insertion of the data collector element into the workflow, concepts of graphical programming techniques and textual approaches are unified and taken advantage of.

The embedding of the data collector element into the workflow, the enabling of the data capture mode and of the data transfer mode and the enabling of the data receiving and storage element is done by graphically selecting a task respectively. After all configuration procedures related to a characterization of the data collector element have been completed, all actions of starting the data capture, etc. are triggered by simply using graphical approaches like pushing a button, enabling a check box, etc. This makes a usage of the presented method very simple and straightforward.

The data collector element comprises a data communication interface, the data communication interface being further connected to the data receiving and storage element. If the method is implemented in a compact software block structure the data collector element is preferably connected to the receiving and storage element by means of a software implemented data communication using for example interprocess communication techniques. In case the method is implemented using elements distributed in a modular and/or spatially separated way, the data communication interface is preferably implemented by means of standardized communication protocols like for example wireless communication techniques.

A monitoring entity retrieves the captured data from the receiving and storage element and converts it into a user-friendly format. The monitoring entity prepares the captured data such that an interpretation of results and trends of values depending on time and user-defined parameters is possible. Preferably, the monitoring entity comprises software code able to generate graphical data which allow a faster and easier interpretation by the developer than actual numerical values. For example, graphs are built using a G2 standard format.

The presented method is implemented by a system having means for performing the steps of the method, preferably a software module comprising graphical programming functionality, a library implementing data collector elements of all supported types and all supported modes and a library implementing a desired communication interface. Preferably, the system further comprises internal interfaces between its entities and is designed in a modular manner such that each module is easily replaceable, for example if a new communication interface is required, only the library implementing the communication interface has to be changed.

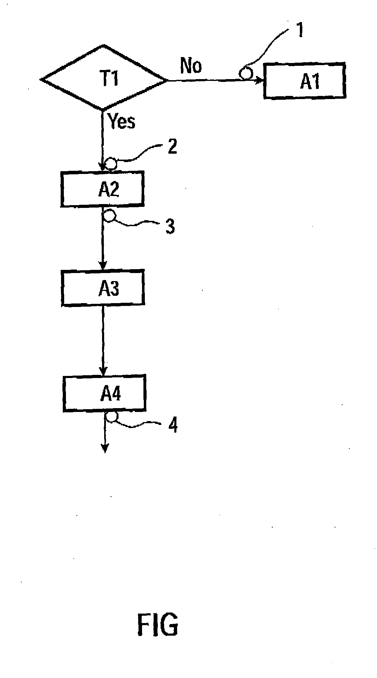

Features and advantages of the present invention will become more apparent from the following detailed description in conjunction with the following figures and example, whereby:
- Figure:: Example of a workflow implementing four data collector elements
Figure 1 shows an example of a workflow implementing four data collector elements. A first data collector element 1 is defined such that its type is "duration of operation", and its mode is "collect data before and after an operation". Thus, the first data collector element 1 measures a duration of an action A1, whereby the action A1 occurs in case a test T1 has not been passed. If the test T1 has been passed an action A2 is performed. A second data collector element 2 of type "start time of operation" and a mode of "start collecting data from here" is used to record a start time of the action A2. Furthermore, a third data collector element 3 of type "user-defined value" and of mode "collect data after executing operation" is used to collect a value of an invocation counter calculated elsewhere in the workflow and counting a number of times the action A2 has been invoked. After the action A2 has been executed an action A3 and an action A4 are executed. After the action A4 has been executed, a fourth data collector element 4 of type "end time of operation" and of mode "stop collecting data here" is used to record an end time of action A4, whereby an end result is computed, consisting of a time elapsed between the start time of action A2 and the end time of action A4. Thereby, the additional parameter specifying which of previously in the workflow defined data collector elements will stop collecting information is set to 2, meaning that the second data collector element will be stopped.

## Claims

1. Method for monitoring and evaluating application performance in a distributed control system (DCS), comprising the steps of:
a) defining at least one data collector element of a specific type,
b) defining an insertion point of the data collector element to be inserted in a workflow of the application,
c) defining a specific data collection mode, associated with the data collector element,
d) optionally defining at least one parameter to be monitored, the parameter being associated to the data collector element,
e) embedding the data collector element together with the specific data collection mode and the optionally defined parameter at the insertion point into the workflow,
f) enabling a data capture mode and a transfer mode for captured data for the data collector element,
g) activating a data receiving and storage element,
h) transferring the captured data from the data collector element to the receiving and storage element.

2. Method according to claim 1, whereby the specific type of the data collector element is chosen out of the following types: start time of operation, end time of operation, duration of operation, an operation input value, an operation output value, a user-defined value.

3. Method according to claim 1 or 2, whereby the specific data collection mode is chosen out of the following modes: collect data before launching operation, collect data after executing operation, collect data before and after operation, start collecting data from here, stop collecting data here.

4. Method according to one of the preceding claims, whereby the insertion point is graphically defined in the workflow.

5. Method according to one of the preceding claims, whereby the embedding of the data collector element into the workflow, the enabling of the data capture mode and of the data transfer mode and the enabling of the data receiving and storage element is done by graphically selecting a task respectively.

6. Method according to one of the preceding claims, whereby the data collector element comprises a data communication interface, the data communication interface being further connected to the data receiving and storage element.

7. Method according to one of the preceding claims, whereby a monitoring entity retrieves the captured data from the receiving and storage element and converts it into a user-friendly format.

8. System having means for performing the steps of the method according to any of the claims 1 to 7.
